# EUROPEAN PATENT APPLICATION

(11) **EP 0 736 886 A2**
(43) Date of publication of application: **09.10.1996**
(21) Application number: 96103926.0
(22) Date of filing: 13.03.1996
(51) Int. Cl.: H01H 3/20

(54) **Electric safety control assembly, particularly for gardening tools**

(30) Priority: 06.04.1995 IT VI950032 U
(71) Applicant: VALEX S.P.A., I-36015 Schio, Vicenza (IT)
(72) Inventor: Spillere, Antonio, 36030 Villaverla, Vicenza (IT)
(74) Representative: Forattini, Amelia

(57) **Abstract**

An electric safety switch assembly, particularly for gardening tools and the like, includes a box-like container (2) that encloses a monostable electric switch (7) that is connected to a power supply cable (13) for an electric motor and a mechanism for actuating the switch from the outside of the container, which is constituted by a single first-class lever (14) that is pivoted in the container so as to form an internal portion (15) that acts directly on the switch (7) and an external portion (16) that can be operated by a user. The free end of the internal portion (15) of the lever has a transverse tab (19) that acts by sliding on the arc-like surface of the button (10) of the switch. A movable safety device (20) acts on the lever (14) to lock it selectively in an active or inactive position with respect to the switch (7). The container (3) and the lever (14) are both made of semirigid elastomer material such as polypropylene by molding or injection-molding processes.

## Description

The present invention relates to an electric control assembly, particularly for operating gardening tools and machines such as lawn mowers, sprinklers, and other electrical devices that must comply with safety standards in a wet environment and in the presence of water sprays.

Conventional switch assemblies of the above mentioned type include a box-like container made of a waterproof insulating material, for example plastic, that is mounted on the frame of the machine and internally encloses an electric switch that is connected to input/output cables for operating the drive motor. In order to operate the switch from outside, there is an actuation mechanism, a lever or cam, which is generally constituted by a certain number of rigid components that are mutually coupled in a relatively precise manner, with an end lever or button that protrudes outside the container and can be actuated by the user.

As required by the applicable standards, the container must be watertight, in that it must prevent any seepage of water even in the presence of sprays of a certain intensity and pressure through possible entry regions, such as for example the openings for the passage of the lever of the actuation mechanism or the closure edges of the container. For this purpose, there is a sealing means that is constituted by gaskets or membranes that must generally be assembled by hand.

These conventional switch assemblies perform their task effectively, but they are not free from some acknowledged drawbacks.

The actuation devices of the switch are in fact relatively complicated mechanisms that are constituted by a considerable number of parts of a certain precision. Furthermore, their assembly is rather troublesome and difficult to perform automatically, and accordingly entails relatively high labor costs.

Another drawback is the intrinsic cost of the components, which are made of expensive plastics.

The aim of the present invention is to improve the existing devices by providing an electric actuation switch assembly that has characteristics of high reliability and accident-prevention safety but also of great simplicity and extremely low cost.

Within the scope of this general aim, a particular object is to provide a switch unit assembly that is composed of a minimal number of parts that have a relatively simple structure and are such that they can be easily assembled with manual or automatic operations in extremely short times.

This aim, this object, and others that will become apparent hereinafter are achieved by an electric safety switch assembly, particularly for gardening tools and the like, that includes a box-like container that encloses a monostable electric switch that is connected to a power supply cable for an electric motor and a mechanism for the actuation of the switch from the outside of the container, characterized in that the actuation mechanism is constituted by a single first-class lever that is pivoted in the container so as to form an internal portion that acts directly on the switch and an external portion that can be operated by a user.

An actuation device with an electric switch of the type indicated above offers the advantage of enormous simplification in construction and assembly, improving reliability and drastically reducing assembly costs.

Preferably, an active safety device is provided which acts on the lever to lock it selectively in an active or inactive position with respect to the button.

The safety device can be constituted by a pivot having a transverse stop tooth that is suitable to selectively interfere with a recess of the inside portion of the lever.

Advantageously, both the container and the lever can be made of a semirigid elastomer material such as polypropylene by molding or injection-molding processes.

It is also possible to provide a first labyrinth means between the lever and the container, constituted by two mutually facing sliding surfaces, and a second labyrinth means interposed between the sliding surfaces and the electric switch.

An electric switch assembly according to the invention ensures perfect watertightness without using expensive membranes or gaskets. It also minimizes the number of components and reduces the production costs.

For better understanding of the invention, a preferred but not exclusive embodiment of an electric switch assembly according to the invention is described hereinafter and illustrated by way of non-limitative example with the aid of the accompanying drawings, wherein:

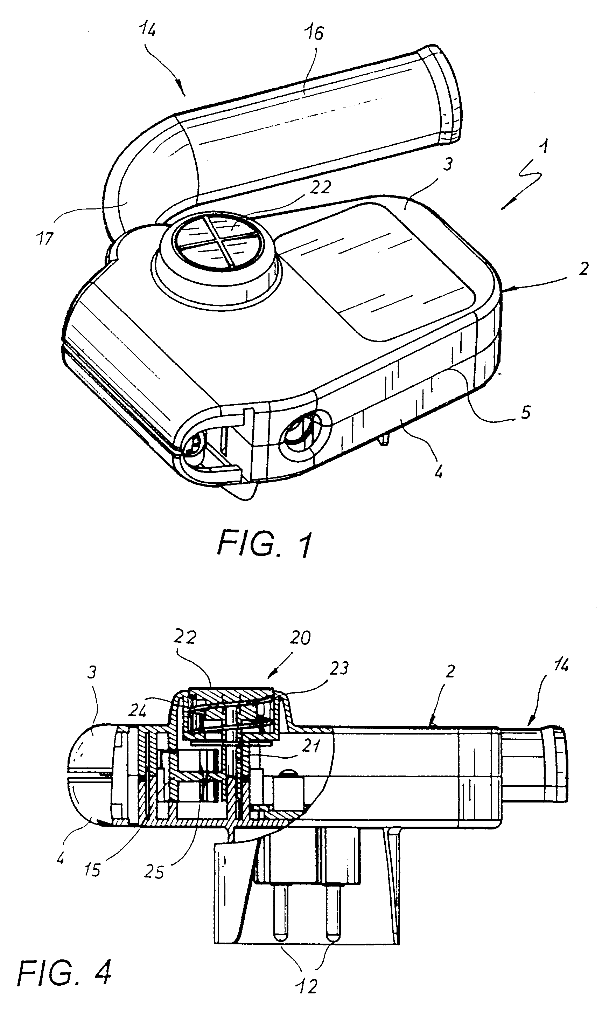

Figure 1 is a perspective view of the actuation assembly according to the invention, isolated and not yet installed on a gardening tool or machine;
Figure 2 is a plan view of a detail of the assembly of Figure 1;
Figure 3 is a plan view of a second detail of the assembly of Figure 1;

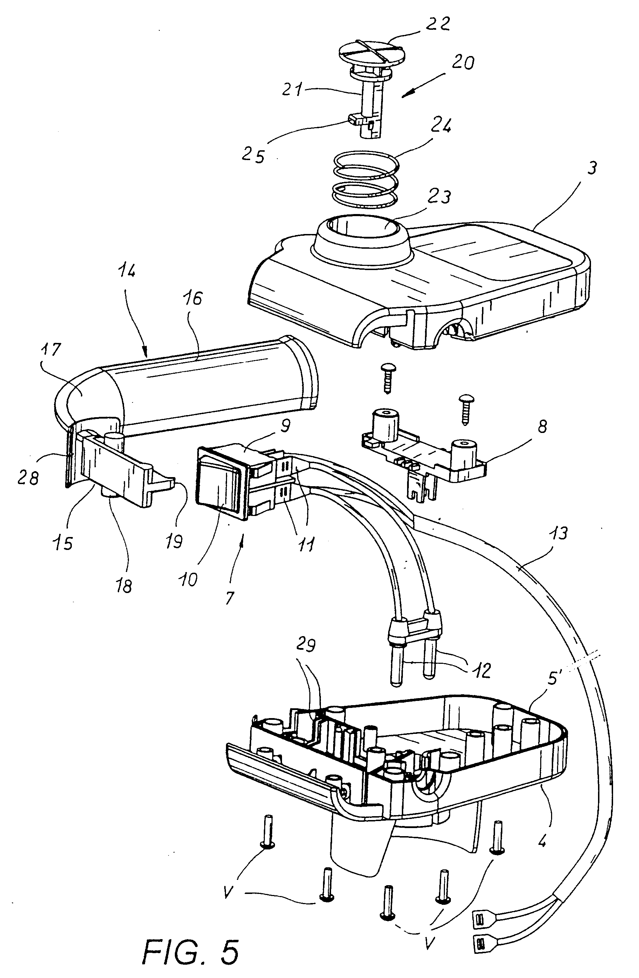

Figure 4 is a sectional view of the assembly of Figure 1;
Figure 5 is an exploded perspective view of the assembly of Figure 1.

With reference to the above figures, a switch unit according to the invention, generally designated by the reference numeral 1, includes a box-like container 2 constituted by a lower half-shell 3 and by an upper half-shell 4 that are made of semirigid low-cost plastic, for example polypropylene, by injection-molding processes. Half-shells 3 and 4 are coupled along the facing edges 5 of the side walls, which are complementarily shaped, by screws V or equivalent parts.

Labyrinth seals 5', of a per se known shape, within the grasp of any technician in the field, can be provided along these edges.

Container 2 is internally provided with a hermetic chamber 6 that accommodates an electric switch 7, of a per se known and easily commercially available type, and is anchored to the lower half-shell by a bracket 8.

Preferably, switch 7 is of an unstable bipolar type, formed by a main body 9 on which a rocker-like button 10, with a curved outer surface, is mounted. Switch 7 contains a spring, not shown in the drawings, that is suitable to keep a button 10 in the normally-open position. Input/output connectors 10, for example of the so-called Faston type, are connected to an electric current source 12, at one end, and to a power supply cable 13 for the electric motor, not shown in the drawings, at the other end.

According to the invention, the actuation mechanism of the switch is constituted by a single first-class lever 14 that is substantially L-shaped, with arms 15 and 16 connected by a curved blending portion 17. Lever 14 is also preferably made of semirigid plastic, for example low-cost polypropylene. Arm 15 is pivoted about a pivot 18 formed inside lower half-shell 4, so as to act directly on switch 7, whereas arm 16 lies outside the container and constitutes a handle that can be gripped by a user. The axis of pivot 18 lies proximate to the peripheral edge of container 2.

In particular, internal arm 15 of actuation lever 14 has a tab 19 that is in sliding contact against the curved outer surface of button 10 of switch 7.

There is a safety device 20 for selectively locking actuation lever 14 in the active or inactive position with respect to switch 7:

Device 20 is constituted by a pivot 21 that has an enlarged head 22. The pivot, which preferably has a square or polygonal transverse cross-section, is slidingly guided within corresponding cavities of half-shells 3 and 4 that are not visible in the drawings, whereas the head is accommodated in a circular seat 23 of upper half-shell 3. A spring 24 is interposed between head 22 and seat 23 and keeps pivot 21 in a normally raised position.

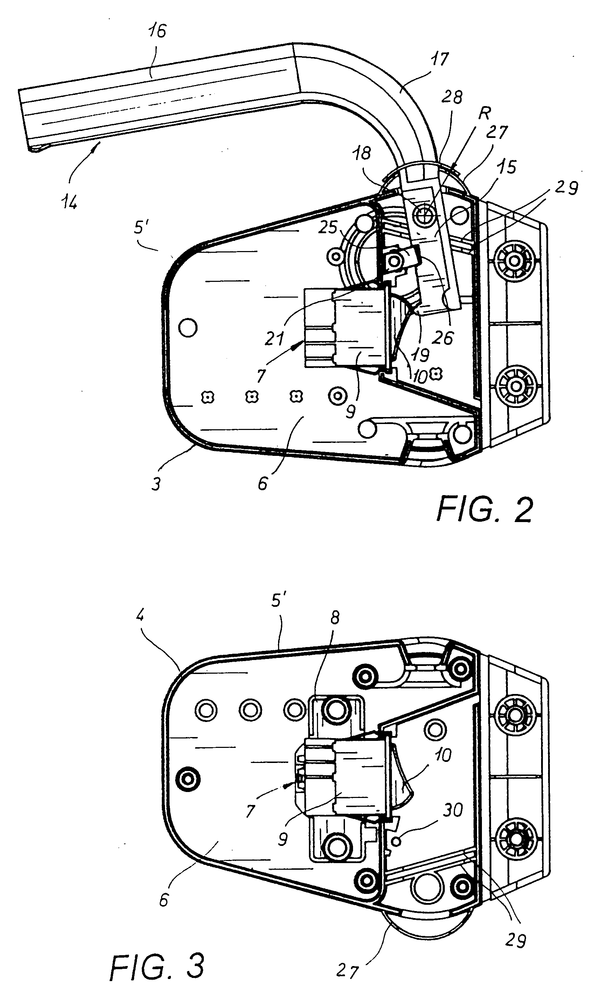

Conveniently, pivot 21 has a retention tooth or transverse protrusion 25 that is suitable to engage in a complementarily shaped recess 26, formed on the inside portion 15 of lever 14, when pivot 21 is in raised position. In this position, the lever is locked and cannot cause the actuation of switch 7. By pressing head 22 of pivot 21, protrusion 25 disengages from recess 26 and the lever can rotate clockwise, in Figure 2, causing the actuation of switch 7. Once lever 14 has been released, pivot 21 rises again, and again causes the engagement of protrusion 25 with recess 26.

Therefore, in order to actuate the switch it is necessary to perform two separate actions: namely, press device 20 and turn lever 14. If head 22 of device 20 is not pressed, it is in any case not possible to actuate switch 7 and thus start the motor.

A first labyrinth-type sealing means is provided between lever 14 and container 2 and includes two mutually facing sliding surfaces.

In particular, a portion 27 of the lateral edge of the container protrudes outward with a profile that is shaped like a circular arc having a radius R that is centered on the axis of pivot 18 of the lever. An arc-like slot, having a limited angular breadth and not shown in the drawings, is provided on the protruding portion 27 for the passage of lever 14.

A second sliding surface is formed on lever 14, in blending portion 17, and is constituted by a wall 28 that has the profile of a circular arc whose radius is approximately identical to the radius R of protruding portion 27. By means of the slightly forced assembly of the lever on the container, the two surfaces 27 and 28 produce a seal against the infiltration of water in the device.

A second labyrinth means 29 is provided on the container and is interposed between sliding surfaces 27 and 28 and electric switch 7, so as to delimit hermetic chamber 6.

The hermetic chamber can have a discharge hole 30 to drain any residual humidity that may have accumulated in chamber 6.

The electric switch assembly according to the invention is susceptible of numerous modifications and variations, all of which are within the scope of the inventive concept expressed by the accompanying claims. All the details may be replaced with technical equivalents. The materials, the shapes, and the dimensions may be any according to the requirements.

## Claims

1. Electric safety switch assembly, particularly for gardening tools and the like, comprising a box-like container (2) enclosing a monostable electric switch (7) connected to a power supply cable (13) for an electric motor and a mechanism for actuating said switch from the outside of said container, characterized in that said actuation mechanism is constituted by a single first-class lever (14) that is pivoted in said container (2) so as to form an internal portion (15) that acts directly on said switch (7) and an external portion (16) that can be operated by a user.

2. Switch assembly according to claim 1, characterized in that a free end of the inner portion (15) of said lever has a transverse tab (19) that acts by sliding on the arc-like surface of the button (10) of the switch.

3. Switch assembly according to claim 1, characterized in that said lever (14) is substantially L-shaped, having a shorter arm (15) forming said inner portion, a pivoting axis (18) of said lever being substantially perpendicular to the plane of said lever's extension and being arranged proximate to an inside edge of said container (2).

4. Switch assembly according to claim 1, characterized in that it comprises a safety device (20) movable on command and acting on said lever (14) to lock it selectively in an active or inactive position with respect to said switch (7).

5. Switch assembly according to claim 4, characterized in that said safety device (20) comprises a pivot (21) having a transverse retention tooth (25) adapted to selectively interfere with a recess (26) of an internal portion (15) of said lever (14).

6. Switch assembly according to claim 5, characterized in that said pivot (21) can move axially in said container between a raised locking position, wherein said retention tooth (25) engages in said recess (26), and a lowered release position, wherein said retention tooth (29) lies outside the path for engagement with said recess (26).

7. Switch assembly according to claim 6, characterized in that said pivot (21) has an enlarged head (22) arranged outside said container and accommodated in a complementarily shaped seat (23), an elastic contrast means (24) being arranged in said seat (23) below said head (22) to keep it normally raised with the pivot (21) in locking position.

8. Switch assembly according to claim 1, characterized in that said container (2) and said lever (14) are made of a semirigid elastomer material such as polypropylene by molding or injection-molding processes.

9. Switch assembly according to claim 1, characterized in that it provides for a first labyrinth means between said lever (14) and said container (2), said means being constituted by two mutually facing sliding surfaces (27, 28).

10. Switch assembly according to claim 9, characterized in that one (27) of said sliding surfaces is constituted by a portion of the lateral edge of said container that protrudes outward with a profile that is shaped like a circular arc having a radius (R) centered on the pivoting axis of the lever, an arc-like slot of limited angular breadth being formed on said protruding portion for the passage of said lever.

11. Switch assembly according to claim 10, characterized in that the other sliding surface (28) is constituted by a wall having a profile shaped like a circular arc having a radius (R) that is approximately identical to that of said protruding portion (27) of the edge of the container, said surface being formed on said lever so as to cover said slot during the rotation of said lever.

12. Switch assembly according to claim 11, characterized in that said container (2) has a second labyrinth means (29) interposed between said sliding surfaces (27, 28) and said electric switch (7).

13. Switch assembly according to claim 12, characterized in that said electric switch (7) is anchored inside said container (2) in an internal chamber (6) that is delimited by said second labyrinth means (29) and is provided with a hole (30) for discharging the residual humidity.
